# EUROPÄISCHE PATENTSCHRIFT

(11) **EP 1 792 069 B1**
(45) Veröffentlichungstag und Bekanntmachung des Hinweises auf die Patenterteilung: **26.11.2008**
(21) Anmeldenummer: 05747849.7
(22) Anmeldetag: 11.05.2005
(51) Int. Cl.: F02D 41/20, H01L 41/04

(54) **SCHALTUNGSANORDNUNG UND VERFAHREN ZUM LADEN UND ENTLADEN WENIGSTENS EINER KAPAZITIVEN LAST**
CIRCUIT ARRANGEMENT AND METHOD FOR CHARGING AND DISCHARGING AT LEAST ONE CAPACITIVE LOAD
ENSEMBLE CIRCUIT ET PROCEDE POUR CHARGER ET DECHARGER AU MOINS UNE CHARGE CAPACITIVE

(30) Priorität: 23.09.2004 DE 102004046192
(43) Veröffentlichungstag der Anmeldung: 06.06.2007
(73) Patentinhaber: Continental Automotive GmbH, 30165 Hannover (DE)
(72) Erfinder: AUGESKY, Christian Georg, 93055 Regensburg (DE); GÖTZENBERGER, Martin, 85051 Ingolstadt (DE)
(86) Internationale Anmeldenummer: PCT/EP2005/052138
(87) Internationale Veröffentlichungsnummer: WO 2006/032543

(56) Entgegenhaltungen:
- DE-A1- 10 114 421
- DE-A1- 10 151 421
- DE-A1- 10 303 779
- DE-A1- 19 814 594
- DE-A1- 19 954 023

## Beschreibung

Die vorliegende Erfindung betrifft eine Schaltungsanordnung zum Laden und Entladen wenigstens einer kapazitiven Last, insbesondere eines Piezoaktors eines Kraftstoffinjektors einer Brennkraftmaschine, nach dem Oberbegriff des Anspruchs 1, sowie ein entsprechendes Verfahren nach dem Oberbegriff des Anspruchs 11.

Die Verwendung von piezoelektrischer Keramik zur Betätigung von Kraftstoffeinspritzventilen einer Brennkraftmaschine stellt erhebliche Anforderungen an die Elektronik zum Aufladen und Entladen der Piezokeramik. Es müssen dabei vergleichsweise große Spannungen (typisch 100V oder mehr) und kurzzeitig vergleichsweise große Ströme zur Ladung und Entladung (typisch mehr als 10A) bereitgestellt werden. Zur Optimierung der Motoreigenschaften (z.B. Abgaswerte, Leistung, Verbrauch etc.) sollten diese Lade- und Entladevorgänge in Bruchteilen von Millisekunden mit gleichzeitig weitgehender Kontrolle über Strom und Spannung erfolgen. Die Eigenheit der Piezokeramik als nahezu rein kapazitive Last mit nur vergleichsweise geringer umgesetzter Wirkleistung, aber andererseits hoher Blindleistung erfordert mehr oder weniger aufwändige Schaltungskonzepte für die Elektronik zur Ansteuerung der Piezoelemente.

Aus der DE 199 44 733 A1 ist eine Schaltungsanordnung zum Ansteuern wenigstens eines kapazitiven Stellgliedes bekannt. Diese bekannte Anordnung basiert auf einem bidirektional betriebenen Sperrwandler und ermöglicht eine exakte Zumessung von Energieportionen beim Laden und Entladen des Stellgliedes, so dass nahezu beliebige gemittelte Stromverläufe beim Laden und Entladen realisiert werden können. Das zeitliche Verhalten ist durch ein konstantes Raster, das den einzelnen Schaltvorgängen unterlagert ist, ebenfalls unter voller Kontrolle. Durch das Sperrwandlerprinzip werden andererseits jedoch nicht unerhebliche Belastungen an den verwendeten Schalttransistoren hervorgerufen, die sich tendenziell negativ auf den elektrischen Wirkungsgrad und damit verbunden die thermische Belastung der Schaltungsanordnung auswirken können. Dies ist bei der Auswahl der für die Schaltungsanordnung verwendeten elektrischen Komponenten zu berücksichtigen. Wenngleich diese bekannte Lösung funktional vollkommen zufriedenstellend ist, so besitzt diese noch ein gewisses Verbesserungspotential hinsichtlich der Kosten, der elektrischen Verlustleistung sowie der elektromagnetischen Verträglichkeit, welches für künftige Anwendungen interessant sein könnte.

Aus der DE 198 14 594 A1 ist eine Schaltungsanordnung zum Laden und Entladen eines piezoelektrischen Elements bekannt. Diese bekannte Ansteuerschaltung basiert auf einer Halbbrücken-Endstufe, die über eine Induktivität (Drossel) das Piezoelement ansteuert, wobei diese Drossel in erster Linie dazu dient, den beim Laden auftretenden Ladestrom und den beim Entladen auftretenden Entladestrom zu begrenzen. Wenngleich bei dieser Ansteuerung die Aufladung mit einem unterbrechungsfreien Stromfluss und daher mit sehr gutem Wirkungsgrad erfolgen kann und die Belastung der verwendeten Komponenten niedriger als bei der vorher erwähnten Sperrwandler-Anordnung ist, so benötigt diese Ansteuerung eine Versorgungsspannung, die über der maximalen Spannung am Piezoventil liegen muss. Ein daher in der Praxis erforderlicher DC/DC-Wandler, beispielsweise zum Wandeln einer üblichen Kraftfahrzeugbordspannung von 12V oder 24V in eine geeignete Versorgungsspannung (z.B. mehrere 100V), verschlechtert den elektrischen Gesamtwirkungsgrad der Ansteuerelektronik erheblich.

Eine Schaltungsanordnung sowie ein Verfahren nach dem Oberbegriff des Anspruchs 1 bzw. 11 sind aus der DE 199 54 023 A1 bekannt. Die bekannte Schaltungsanordnung dient zur Ansteuerung von Injektoren einer Kraftstoff-einspritzvorrichtung und umfasst eine Schwingkreisanordnung mit einer Induktivität und einer Kapazität. Parallel zu der Kapazität ist einer von mehreren Schaltern angeordnet, mittels welchen die Lade- und Entladevorgänge bewerkstelligt werden. Eine zum Ansteuern der Leistungsschalter notwendige Steuereinheit bzw. die Funktionsweise einer solchen Steuereinheit sind in dieser Veröffentlichung jedoch nicht explizit beschrieben.

Aus der DE 101 14 421 A1 ist eine Schaltungsanordnung sowie ein Verfahren zum Steuern eines kapazitiven Stellglieds bekannt. Die darin beschriebene Schaltungsanordnung weist eine der kapazitiven Last (piezoelektrischer Aktuator) in Reihe geschaltete Shuntimpedanz auf, die wiederum aus einer Reihenschaltung eines Widerstands und eines Kondensators besteht. Die über diese Shuntimpedanz abfallende Spannung wird zur Regelung des Hubverlaufs des piezoelektrischen Aktuators herangezogen und entspricht einer gewichteten Summe aus elektrischer Ladung des Aktuators und Laststrom.

Aus der DE 101 51 421 A1 ist eine Schaltungsanordnung zum Laden und Entladen von Piezobetätigungsgliedern einer Kraftstoffeinspritzanlage bekannt. Bei dieser bekannten Schaltungsanordnung ist in Reihe mit den Piezobetätigungs-gliedern ein Widerstand geschaltet, um durch eine Messung der daran abfallenden Spannung den Ladestrom bzw. Entladestrom zu erfassen.

Aus der DE 198 14 594 A1 sind ein Verfahren und eine Vorrichtung zum Laden und Entladen eines piezoelektrischen Elements bekannt, wobei ebenfalls ein Widerstand in Reihe zum piezoelektrischen Element geschaltet ist, mittels welchem eine Erfassung des Stromes beim Laden und Entladen ermöglicht ist.

Aus der DE 103 03 779 A1 ist eine Schaltungsanordnung zum Laden und Entladen piezoelektrischer Elemente bekannt. Diese Schaltungsanordnung umfasst einen Schaltwandler mit mehreren Leistungsschaltern. Um beim Einschalten eines dieser Leistungsschalter Schaltverluste zu vermeiden, wird dieser Leistungsschalter erst eingeschaltet, wenn die daran anliegende Spannung auf den Wert Null gebracht ist. Eine zum derartigen Ansteuern der Leistungsschalter notwendige Steuereinheit ist in dieser Veröffentlichung nicht explizit beschrieben. Ein Strommesswiderstand ist der kapazitiven Last in Reihe geschaltet und dient zur Messung des Lade- bzw. Entladestroms.

Es ist eine Aufgabe der vorliegenden Erfindung, das Laden und Entladen wenigstens einer kapazitiven Last mit hohem Wirkungsgrad, niedrigen Verlusten und besonders kosteneffizient zu ermöglichen.

Diese Aufgabe wird gelöst durch eine Schaltungsanordnung nach Anspruch 1 und ein Verfahren nach Anspruch 11. Die abhängigen Ansprüche betreffen vorteilhafte Weiterbildungen der Erfindung.

In an sich bekannter Weise erfolgt bei der Erfindung das Laden und Entladen durch Umschwingvorgänge an einer Schwingkreisanordnung, so dass vorteilhaft die beim Laden in die Last eingespeicherte Energie beim Entladen mehr oder weniger vollständig zurückgespeichert werden kann und somit für einen erneuten Ladevorgang zur Verfügung steht. Die Schwingkreisanordnung umfasst hierbei die zu ladende und entladende kapazitive Last sowie wenigstens eine Induktivität (z. B. Drosselspule) und wenigstens eine Kapazität (Kondensator). Letztere Kapazität kann hierbei als Speicherkapazität zur temporären Speicherung der Energie innerhalb der Schwingkreisanordnung dienen. Die Umschwingvorgänge werden hierbei durch angesteuertes Schließen und Öffnen wenigstens eines erstens Schalters und wenigstens eines zweiten Schalters angeregt.

Bevorzugt sind zum Laden und Entladen der kapazitiven Last jeweils mehrere Umschwingvorgänge vorgesehen, um die zur Last hin und von der Last zurück zu übertragende elektrische Ladung mehrstufig zu übertragen, d. h. über mehrere zum Umschwingen von Energie geeignet ausgebildete Schwingkreisanordnungsabschnitte, und/oder in einzelnen "Ladungsportionen".

Es ist weiter vorgesehen, dass durch Schließen eines der Schalter die Zufuhr von Energie aus einer Versorgungsspannungsquelle in die Schwingkreisanordnung bewirkt werden kann. Durch diese Maßnahme kann der Versorgungsspannungsquelle beim Laden benötigte Energie entnommen werden und können im Bereich der Schaltungsanordnung auftretende elektrische Verluste ausgeglichen werden.

Die durch eine Steuereinheit angesteuerten Schalter können beispielsweise als Halbleiterschaltelemente, insbesondere Feldeffekttransistoren ausgebildet sein. Diese Ansteuerung erfolgt basierend auf wenigstens einem der Steuereinheit eingegebenen Messsignal.

Bekanntlich entstehen beim Umschalten von realen Schaltelementen erhebliche Umschaltverluste, wenn das Umschalten "unter Last" erfolgt, etwa wenn unmittelbar vor dem Schließen des Schalters eine hohe Spannung über dem Schalter abfällt oder unmittelbar vor dem Öffnen des Schalters ein hoher Strom über den Schalter geführt wird. Dementsprechend ist es von Vorteil, wenn bei "Nullspannung" oder "Nullstrom" geschaltet wird.

Gemäß der Erfindung wird der Steuereinheit ein Messsignal bereitgestellt, welches es in besonders einfacher (kostengünstiger) und zuverlässiger Weise ermöglicht, Zeitpunkte in den Umschwingvorgängen zu erkennen, zu welchen eine Betätigung der Schalter mit geringen Schaltverlusten erfolgen kann. Gemäß der Erfindung wird als das Messsignal die an einem Strommesswiderstand abfallende Spannung verwendet, wobei dieser Strommesswiderstand ("Shunt") der Kapazität in Reihe geschaltet ist und wobei diese Kapazität und die Schalter derart angeordnet sind, dass die über der Kapazität abfallende Spannung repräsentativ für die über wenigstens einem der Schalter abfallende Spannung ist.

Durch diese spezielle Art der Bereitstellung des zur Ansteuerung der Schalter verwendeten Messsignals wird es der Steuereinheit insbesondere ermöglicht, zuverlässig diejenigen Zeitpunkte in den Umschwingvorgängen zu erkennen, zu denen wenigstens die über einem der Schalter abfallende Spannung einen Extremwert erreicht. Bei einem solchen Extremwert kann es sich beispielsweise um ein Minimum (nicht zwingend 0 Volt) handeln, wobei z. B. der betreffende Schalter bei Erreichen dieses Minimums ohne nennenswerten Schaltverlust eingeschaltet werden kann. Wenn es sich bei dem ermittelten Zeitpunkt um das Erreichen eines Maximums der über einem der Schalter abfallenden Spannung handelt, so kann dies vorteilhaft zum Einschalten des anderen Schalters mit geringem Schaltverlust in dem Fall genutzt werden, in welchem die an den beiden Schaltern abfallenden Spannungen auf Grund des betreffenden Schaltungsaufbaus komplementär in dem Sinne sind, dass die an einem Schalter abfallende Spannung umso größer ist je kleiner die an dem anderen Schalter zum selben Zeitpunkt abfallende Spannung ist. Eine derartige Komplementarität ergibt sich beispielsweise für Schaltungskonzepte, bei welchen der erste Schalter und der zweite Schalter eine Reihenschaltung bilden, die mit einer im Wesentlichen fest vorgegebenen Spannung beaufschlagt wird. Dieses Schaltungskonzept ist daher als eine der bevorzugten Ausführungsformen der Erfindung zu betrachten.

Ein besonderer Vorteil der Verwendung des oben erläuterten Messsignals besteht darin, dass insbesondere für zeitlich betrachtet nur allmählich erreichte Extremwerte der an einem Schalter abfallenden Spannung der Zeitpunkt des Erreichens dieses Extremwerts besonders präzise ermittelt werden kann. Dies ist deshalb möglich, weil es gemäß der Erfindung zu diesem Zweck nicht notwendig ist, den extremen Wert vorher zu kennen bzw. vorher festzulegen und dann als Referenz für einen Vergleich mit der tatsächlich abfallenden Spannung heranzuziehen. Vielmehr ist es gemäß der Erfindung möglich, den genauen Zeitpunkt des Erreichens eines Extremwerts daran zu erkennen, dass die zeitliche Ableitung der am betreffenden Schalter abfallenden Spannung etwa Null wird oder einen Nulldurchgang besitzt. Durch dieses Prinzip lassen sich die "richtigen Schaltzeitpunkte", die zur Reduzierung von Schaltverlusten erhebliche Bedeutung besitzen, wesentlich genauer ermitteln. Da die über der Kapazität abfallende Spannung repräsentativ für die über dem betreffenden Schalter abfallende Spannung ist, also insbesondere z. B. identisch mit der abfallenden Spannung ist, wird der in die Kapazität hinein oder heraus fließende Strom beim Erreichen einer Extremspannung minimal (Null bzw. Nulldurchgang). Gerade dieser Strom wird jedoch durch den in Reihenschaltung zu der Kapazität angeordneten Strommesswiderstand in einfacher Weise messbar. Die an dem Strommesswiderstand abfallende Spannung ist proportional zu diesem Strom.

Eine Besonderheit der Erfindung besteht darin, dass der Reihenschaltung aus der Kapazität und dem Strommesswiderstand eine weitere Kapazität parallel geschaltet ist. Diese Aufteilung der Kapazität auf zwei Parallelzweige spielt praktisch keine Rolle für die elektrischen Eigenschaften dieses Schaltungsabschnitts, er besitzt jedoch einen in der Praxis gravierenden Vorteil hinsichtlich der Realisierung des Strommesswiderstands. Dieser Strommesswiderstand sollte nämlich zur Minimierung von ohmschen Verlusten einen möglichst kleinen Widerstandswert besitzen, was in der Regel zu vergleichsweise hohen Kosten führt. Bei der Aufteilung der Kapazität in mehrere parallele Zweige kann der Strommesswiderstand bei vorgegebener Verlustleistung jedoch tendenziell mit einem größeren Widerstandswert und somit kostengünstiger realisiert werden. Dieser Vorteil ist besonders groß, wenn die weitere Kapazität größer als die dem Strommesswiderstand in Reihe geschaltete Kapazität ist, insbesondere z. B. um einen Faktor von mehr als 10 größer ist.

In einer bevorzugten Ausführungsform ist vorgesehen, dass die Schwingkreisanordnung eine aus der Induktivität und der kapazitiven Last gebildete Reihenschaltung umfasst und sowohl beim Laden als auch beim Entladen der kapazitiven Last der Ladestrom bzw. Entladestrom über die Induktivität geführt wird. Durch diese Maßnahme kann die Induktivität nicht lediglich als temporärer Energiespeicher sondern auch vorteilhaft zur Begrenzung des Lade- und Entladestroms genutzt werden. Beispielsweise kann ein Anschluss der Induktivität über einen elektrischen Pfad (mit oder ohne Zwischenschaltung eines Ausgangsfilters) mit der kapazitiven Last verbunden sein, wohingegen der andere Anschluss der Induktivität über einen weiteren elektrischen Pfad mit einem Schaltungsknoten verbunden sein kann, der einen Mittelabgriff einer Reihenschaltung aus den beiden Schaltern bildet.

In einer bevorzugten Ausführungsform weist die Steuereinheit einen Komparator zum Vergleichen des Messsignals mit wenigstens einem Schwellwert auf. Durch einen solchen Vergleich kann die Steuereinheit in einfacher Weise die optimalen Schaltzeitpunkte ermitteln. Auf Grund der besonderen Art und Weise der Bereitstellung des Messsignals kann hierbei schaltungstechnisch vorteilhaft ein Schwellwert von etwa 0 Volt gewählt werden. Eine auf internen betrieblichen Kenntnissen der Anmelderin beruhende frühere Lösung zur Ermittlung von optimalen Schaltzeitpunkten verwendete eine direkte Messung der Spannung an einem Schalttransistor. Auf Grund der insbesondere bei Endstufen für Piezoaktoren relativ hohen Spannungen im Bereich von mehreren 100 Volt musste diese Spannung zunächst jedoch stark geteilt werden, um ein für einen üblichen Komparator geeignetes Spannungsniveau zu erhalten. Zudem ergab sich bei allmählichem Erreichen eines Extremwerts eine vergleichsweise hohe Ungenauigkeit der Ermittlung. Diese Nachteile sind mit der vorliegenden Erfindung beseitigt. Wenn beispielsweise der Scheitelwert einer sinusartigen Schwingung erkannt werden soll, so ist hierfür einfach der Nulldurchgang des gemäß der Erfindung verwendeten Messsignals (= zeitliche Ableitung der Spannung) zu detektieren.

In einer Weiterbildung ist vorgesehen, dass das Messsignal im Betrieb der Schaltungsanordnung mit mehreren Schwellwerten verglichen wird, also z. B. ein Komparator verwendet wird, dessen dem Schwellwert entsprechende Referenz während des Betriebs der Schaltungsanordnung verändert wird.

Eine Veränderbarkeit des Schwellwerts im Betrieb der Schaltungsanordnung besitzt den besonderen Vorteil, dass damit in einfacher Weise das Erreichen eines Extremwerts der am Strommesswiderstand abfallenden Spannung gut detektiert werden kann, wenn dieser Extremwert konzeptbedingt für eine gewisse Zeitspanne vorliegt, es sich also um "zeitlich ausgedehnte" Maxima oder Minima handelt. Das Erreichen eines Maximums kann dann z. B. mit einem kleinen positiven Schwellwert (entsprechend der kleinen positiven Steigung des Spannungsverlauf unmittelbar vor Erreichen des Maximums) detektiert werden, wohingegen das Erreichen eines Minimums durch Verwendung eines kleinen negativen Schwellwerts (entsprechend der kleinen negativen Steigung beim Erreichen des Minimums) detektiert werden kann. Da der grobe zeitliche Verlauf der Umschwingvorgänge durch das verwendete Schaltungskonzept und die elektrischen Eigenschaften der verwendeten Komponenten festgelegt ist, bereitet es in der Praxis z. B. keinerlei Schwierigkeiten, den Vergleichsschwellwert jeweils "rechtzeitig" (getaktet) auf einen von zwei vorgegebenen Schwellwerten umzustellen (um Maxima und Minima der über der Kapazität bzw. dem Schalter abfallenden Spannung alternierend zu erfassen).

Damit die über der Kapazität abfallende Spannung repräsentativ für die über dem betreffenden Schalter abfallende Spannung ist, kann z. B. vorgesehen sein, dass die Kapazität in einem parallel zu dem betreffenden der Schalter angeordneten Pfad angeordnet ist. Damit wird sichergestellt, dass eine größere Spannung am Schalter eine entsprechend größere Spannung an der Kapazität bedingt. Wenn der Strommesswiderstand als Shunt mit vergleichsweise kleinem elektrischen Widerstand ausgebildet ist und zusammen mit der Kapazität diesen Parallelpfad bildet, so kann die am Widerstand abfallende Spannung gegenüber der an der Kapazität abfallenden Spannung vernachlässigt werden. In diesem Fall ist die über der Kapazität abfallende Spannung praktisch gleich der über dem Schalter abfallenden Spannung.

Insbesondere bei Schaltungsanordnungen zum Laden und Entladen von Piezoaktoren eines Kraftstoffinjektors ist es für eine präzise Zumessung von Kraftstoffeinspritzmengen in der Regel erforderlich, dem Piezoaktor einen Strommesswiderstand in Reihenschaltung zuzuordnen, um anhand der daran abfallenden Spannung den Ladestrom bzw. Entladestrom zu erfassen. Die Anordnung dieses Piezostrommesswiderstands kann im Rahmen der vorliegenden Erfindung in einer speziellen Ausführungsform genutzt werden, indem die Kapazität der Schwingkreisanordnung in Reihe zu diesem ohnehin vorgesehenen Strommesswiderstand angeordnet wird. Die Kosten für einen relativ teuren Shuntwiderstand können somit eingespart werden.

Die Erfindung wird nachfolgend anhand von Ausführungsbeispielen mit Bezug auf die beigefügten Zeichnungen weiter beschrieben. Es stellen dar:
- Fig. 1: ist ein Blockschaltbild wesentlicher Komponenten einer Endstufe zum Ansteuern wenigstens eines Piezoaktors,
- Fig. 2: ist eine Darstellung einiger Signalverläufe in der Schaltungsanordnung nach Fig. 1,
- Fig. 3: veranschaulicht eine Endstufe gemäß einer weiteren Ausführungsform,
- Fig. 4a: ist eine Darstellung einiger Signalverläufe in der Schaltungsanordnung nach Fig. 3 beim Laden,
- Fig. 4b: ist eine Darstellung der Signalverläufe in der Schaltungsanordnung nach Fig. 3 beim Entladen,
- Fig. 5: veranschaulicht eine Endstufe gemäß einer weiteren Ausführungsform,
- Fig. 6: ist eine Darstellung einiger Signalverläufe in der Schaltungsanordnung nach Fig. 5, und
- Fig. 7: ist eine Darstellung zur Veranschaulichung der Aufteilung einer in einer Endstufe verwendeten Speicherkapazität auf zwei Parallelzweige.

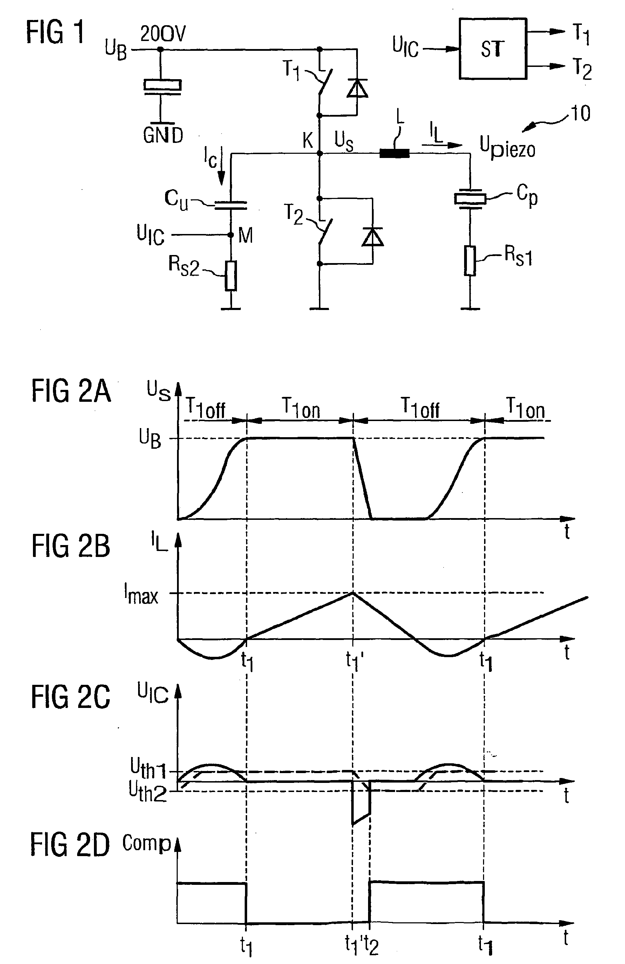

Fig. 1 zeigt eine insgesamt mit 10 bezeichnete Endstufe zum Ansteuern einer Mehrzahl von Piezoaktoren einer Kraftstoffeinspritzanlage eines Kraftfahrzeugs. Der Einfachheit der Darstellung halber ist lediglich einer der durch Laden und Entladen anzusteuernden Piezoaktoren dargestellt und mit Cp bezeichnet. In an sich wohlbekannter Weise können mit einer Endstufe bzw. einer so genannten "Bank" einer Endstufe mehrere Injektoren angesteuert werden, z. B. durch Anordnung von Auswahlschaltern in der Leitungsverbindung zwischen der Endstufe und den einzelnen Piezoaktoren Cp.

Es wird zunächst der Aufbau der Schaltungsanordnung nach Fig. 1 beschrieben. Die Endstufe 10 wird von einer Versorgungsspannung U_{B} (z. B. 200 V) versorgt, die vom Ausgang eines DC/DC-Wandlers bereitgestellt wird und durch einen Pufferkondensator wie in Fig. 1 dargestellt stabilisiert wird.

Diese Versorgungsspannung U_{B} wird zwischen einem ersten Versorgungsanschluss und einem zweiten Versorgungsanschluss (Fahrzeugmasse GND) angelegt, wobei zwischen diesen Versorgungsanschlüssen eine Reihenschaltung aus zwei ansteuerbaren Schaltern angeordnet ist, die im dargestellten Beispiel von Feldeffekttransistoren T₁ und T₂ gebildet sind. Die jeweils parallel zu diesen Schaltern T₁, T₂ eingezeichneten Dioden symbolisieren die Substratdioden der verwendeten FETs. Bei anderer Gestaltung der dieser Halbleiterschaltelemente können diese Dioden separat angeordnet werden.

Als Mittelabgriff dieser Schalteranordnung ist ein Schaltungsknoten K ersichtlich, von welchem einerseits ein elektrischer Pfad über eine Induktivität L zu einem ersten Anschluss ("high side") des Piezoaktors Cp führt und andererseits ein elektrischer Pfad über eine Speicherkapazität Cu und einen in Reihe dazu angeordneten Strommesswiderstand R_{S2} zur Masse GND führt. Die Reihenschaltung aus Kapazität Cu und Widerstand R_{S2} ist also parallel zum zweiten Schalter T₂ angeordnet. Ein als Mittelabgriff dieser Reihenschaltung ersichtlicher Schaltungsknoten M liefert ein Spannungssignal U_{IC}, welches als Messgröße einer Steuereinheit ST zugeführt wird. Diese Steuereinheit ST stellt an ihrem Ausgang Steuersignale für die beiden Schalter T₁, T₂ bereit. Im vorliegenden Fall sind dies entsprechende Gatepotenziale für die als FETs ausgebildeten Schalter.

Der andere Anschluss des Piezoaktors Cp ist über einen weiteren Strommesswiderstand R_{S1} zur Masse GND geführt.

Auch ein am Strommesswiderstand R_{S1} abgegriffenes Strommesssignal, welches repräsentativ für den beim Laden und Entladen des Piezoaktors Cp fließenden Stroms ist, wird der Steuereinheit ST zugeführt und im Rahmen der geregelten Ansteuerung verwendet. Dies ist jedoch in der Figur nicht dargestellt, da diese Strommessung bzw. die darauf basierende Regelung dem Fachmann wohlbekannt ist und für das Verständnis der vorliegenden Erfindung nicht wesentlich ist.

Anhand der Fig. 1 und 2 wird nachfolgend die Funktionsweise der Endstufe 10 erläutert.

Die in Fig. 1 dargestellte Kapazität Cu bildet mit der Ladeinduktivität L einen Schwingkreisabschnitt, der im richtigen Rhythmus durch Schließen und Öffnen der Schalter T₁, T₂ angeregt wird.

Fig. 2 veranschaulicht die zeitlichen Verläufe einer Reihe von Signalen in der Schaltungsanordnung nach Fig. 1 beim Laden des Piezoaktors Cp. Bei diesen Signalen handelt es sich im Einzelnen um die am Schaltungsknoten K herrschende Spannung U_{S} (Fig. 2a), den durch die Induktivität fließenden Strom (Ladestrom oder Entladestrom) I_{L} (Fig. 2b), die am Strommesswiderstand R_{S2} (Schaltungsknoten M) abgegriffene Strommessspannung U_{IC} (Fig. 2c, dicke Linie) und ein Ausgangssignal (Fig. 2d) comp eines in der Steuereinheit ST enthaltenen Komparators, der die Strommessspannung U_{IC} mit einer von zwei Schwellspannungen Uₜₕ₁, Uₜₕ₂ (Fig. 2c, gestrichelte Linien) vergleicht. Zur zuverlässigen Detektion der richtigen Schaltzeitpunkte erfolgt der Übergang von einer Schwellspannung zur anderen Schwellspannung und umgekehrt jeweils nicht sprunghaft sondern allmählich (vgl. Fig. 2c, dünne Linie).

Das Laden und Entladen des Piezoaktors Cp erfolgt durch Umschwingvorgänge an einer Schwingkreisanordnung, die im dargestellten Beispiel von dem Piezoaktor Cp selbst, der Induktivität L sowie der Speicherkapazität Cu gebildet wird. Bei einem Laden des Piezoaktors wird durch mehrmaliges getaktetes Schließen des ersten Schalters T₁ eine elektrische Ladung "portionsweise" über die Induktivität L in den Piezoaktor Cp umgeschwungen.

Es sei angenommen, dass zu einem Zeitpunkt t1 (Fig. 2) über der Speicherkapazität Cu die volle Versorgungsspannung U_{B} abfällt und zu diesem Zeitpunkt der nachfolgend auch als Ladeschalter bezeichnete erste Schalter T₁ geschlossen wird. Dies hat zur Folge, dass in einer als T₁on bezeichneten Phase ein linear ansteigender Strom I_{L} durch die Induktivität L fließt (Ladestrom). Zu einem späteren Zeitpunkt t1' wird der Ladeschalter T₁ wieder ausgeschaltet, wobei der genaue Zeitpunkt hierbei z. B. von der Steuereinheit ST derart vorgegeben werden kann, dass das Ausschalten erfolgt, sobald der mittels des weiteren Strommesswiderstands R_{S1} gemessene Ladestrom einen vorgegebenen Maximalwert Iₘₐₓ erreicht.

In der darauffolgenden Zeitspanne T₁off sinkt der Strom I_{L} ausgehend von diesem Maximalwert Iₘₐₓ wieder ab, wobei der Strom zunächst durch Entladung der Speicherkapazität Cu bereitgestellt wird und dann, wenn die Kapazität Cu vollständig entladen ist, dieser Strom über die Diode (Freilaufdiode) des während des ganzen Ladevorganges geöffneten zweiten Schalters T₂ bereitgestellt wird. In diesem Moment erfolgt das Laden des Piezoaktors Cp gewissermaßen durch ein Umschwingen der in der Induktivität L gespeicherten Energie auf die Kapazität des Piezoaktors Cp. Der zeitliche Ablauf wird maßgeblich durch die Eigenschaften der "LC-Anordnung"(Reihenschaltung aus Induktivität und Kapazität des Piezoaktors) bestimmt, die einen Abschnitt der gesamten Schwingkreisanordnung bildet.

Nachdem am Ende der Zeitspanne T₁off der Ladestrom I_{L} zum Erliegen kommt, dreht sich das Vorzeichen dieses Stroms um, d. h. fließt Strom durch die Induktivität L zurück in die Endstufe, so dass die Spannung U_{S} am Schaltungsknoten K bzw. die über der Kapazität Cu abfallende Spannung wieder ansteigt. Die in dieser Phase zurückgeschwungene Energie wird vorteilhaft in der Kapazität Cu gespeichert und steht für den nächsten Umschwingvorgang zur weiteren Aufladung des Piezoaktors zur Verfügung.

Sobald die über der Kapazität Cu abfallende Spannung U_{S} wieder ihren Maximalwert erreicht, wird der Ladeschalter T₁ erneut geschlossen. Der beschriebene Vorgang wiederholt sich somit. Zur Optimierung der Endstufe hinsichtlich ihres Wirkungsgrades kommt der Festlegung des "richtigen Schaltzeitpunktes" t1 wesentliche Bedeutung zu, da ansonsten erhebliche Verluste auftreten. Auch elektromagnetische Störungen können durch geeignete Wahl dieses Schaltzeitpunktes t1 drastisch reduziert werden.

Die von der Steuereinheit ST erfolgende Festlegung des Einschaltzeitpunktes t1 basiert auf einer Erkennung desjenigen Zeitpunktes, zu dem die Spannung U_{S} ihren Maximalwert erreicht. Zu diesem Zweck wird der Steuereinheit ST über den Schaltungsknoten M die an dem Strommesswiderstand R_{S2} abfallende Spannung U_{IC} zugeführt. Die Steuereinheit ST generiert ein Ausschaltsignal, sobald diese Spannung U_{IC} einen nahe bei Null (positiv) festgelegten Schwellwert Uₜₕ₁ unterschreitet. Dieses Erreichen eines niedrigen Schwellwertes ist gleichbedeutend mit einer sich praktisch nur noch wenig verändernden Spannung U_{S}, was wiederum charakteristisch für das Erreichen des Maximalwerts von U_{S} ist. Die Maximalwerterkennung als Indikator für den Abschluss eines Umschwingvorganges besitzt daher eine große Sicherheit und einfache Realisierung.

Bei synchroner Umschaltung der Komparatorschwelle (von Uₜₕ₁ auf Uₜₕ₂ und umgekehrt) genügt für beide zu erkennenden Schaltzeitpunkte (t1 und t2) ein einziger Komparator. Diese synchrone Umschaltung ist in der Darstellung gemäß Fig. 2d bereits berücksichtigt. Das dargestellte Vergleichsergebnis comp ergibt sich unter Verwendung von Uₜₕ₁ zur Erkennung des Schaltzeitpunktes t1 und unter Verwendung von Uₜₕ₂ zur Ermittlung des Schaltzeitpunktes t2 (beim Entladen).

Die Vorteile der Endstufe sind auch für den Fall gegeben, in welchem auf Grund der Spannung am Piezoaktor ein Erreichen eines Spannungsabfalls an den Schaltern T₁, T₂ von 0 V nicht ermöglicht wird. Wesentlich ist, dass die beschriebene Art und Weise der Festlegung von Schaltzeitpunkten auf der Erkennung von Minimalwerten bzw. Maximalwerten (der Spannung U_{S}) basieren.

Das oben beschriebene Funktionsprinzip kann insbesondere bei allen quasiresonanten Schaltstufen angewendet werden.

Das Entladen des Piezoaktors Cp erfolgt in entsprechender Weise durch mehrmalige Betätigung des zweiten, als Entladeschalter zu bezeichnenden Schalters T₂.

Abweichend vom dargestellten Ausführungsbeispiel könnte die Speicherkapazität Cu beispielsweise auch parallel zu dem Ladeschalter T₁ angeordnet sein.

Bei der nachfolgenden Beschreibung von weiteren Ausführungsbeispielen wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

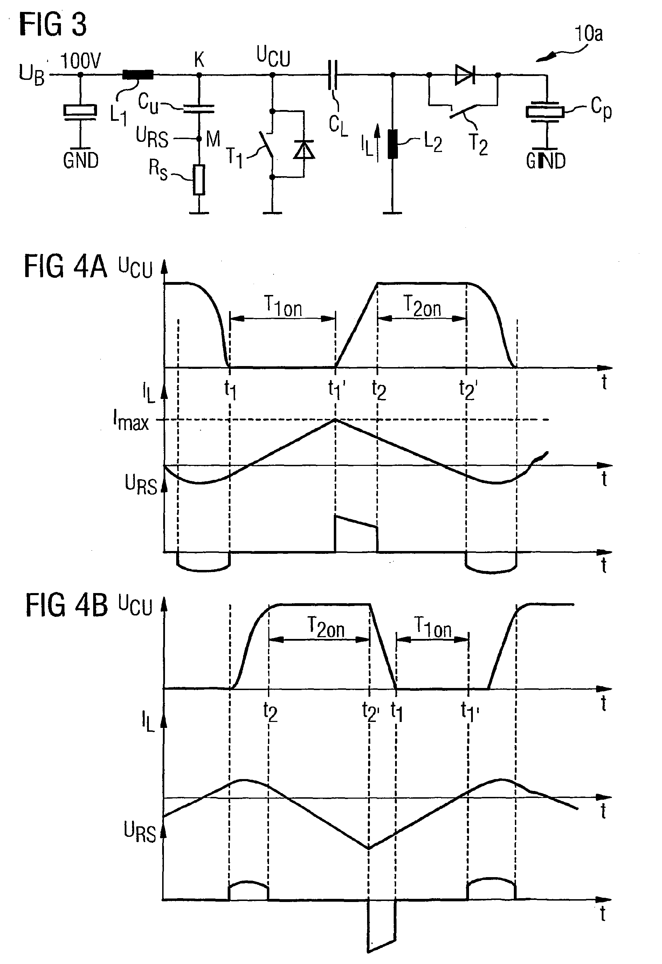

Fig. 3 veranschaulicht das Funktionsprinzip der Erkennung von geeigneten Schaltzeitpunkten beispielhaft an einer anderen Schaltungstopologie, die mit einer weiteren Speicherkapazität C_{L} in einem Längszweig arbeitet und in einem Aufwärtswandlungsmodus betreibbar ist, bei welchem man z. B. mit einer Versorgungsspannung U_{B} (hier: 100 V) auskommt, die lediglich der Hälfte der maximal an den Piezoaktor Cp anzulegenden Spannung (hier: 200 V) entspricht.

Der Einfachheit der Darstellung halber ist in Fig. 3 die zum Ansteuern der beiden Schalter T₁ und T₂ vorgesehene Steuereinheit ST weggelassen. In den Fig. 4a und 4b sind sich ergebende Signalverläufe sowohl für einen Ladevorgang (Fig. 4a) als auch einen Entladevorgang (Fig. 4b) dargestellt.

Bedingt durch das Aufwärtswandlerprinzip der in Fig. 3 dargestellten Endstufe 10a werden sowohl beim Laden als auch beim Entladen des Piezoaktors Cp beide Schalter T₁, T₂ abwechselnd für bestimmte Zeitspannen geschlossen, die in Fig. 4 mit T₁on und T₂on bezeichnet sind.

Die Umschwingvorgänge beim Laden und Entladen erfolgen an einer Schwingkreisanordnung, die gebildet ist aus einer ersten Induktivität L1, einer zweiten Induktivität L2, einer ersten Speicherkapazität Cu, der zweiten Speicherkapazität C_{L} sowie dem Piezoaktor Cp.

Der Aufbau ist wie folgt: Der positive Pol der Versorgungsspannung U_{B} wird über die erste Induktivität L1 zu einem Schaltungsknoten K geführt, von welchem ein erster Pfad über eine Reihenschaltung aus der Kapazität Cu und einem Strommesswiderstand R_{S} zur Masse GND führt. An einem Mittelabgriff M dieser Reihenschaltung wird wieder ein Messsignal (Spannung U_{RS}) als Eingabegröße für die (nicht dargestellte) Steuereinheit ST bereitgestellt. Dieser Reihenschaltung parallel geschaltet ist der erste Schalter T₁ samt Freilaufdiode. Ferner verläuft parallel zu diesem Schalter T₁ eine Reihenschaltung aus der weiteren Kapazität C_{L} und der weiteren Induktivität L2. Ein zwischen letzteren Komponenten befindlicher Schaltungsknoten führt über den zweiten Schalter T₂ samt Freilaufdiode schließlich im Längszweig weiter zum positiven Steueranschluss des Piezoaktors Cp. In Reihenschaltung mit diesem Piezoaktor kann wieder ein Strommesswiderstand (nicht dargestellt) zur Messung des Lade- und Entladestroms angeordnet sein.

Zu einem Zeitpunkt t1 ist die Kapazität C_{L} voll geladen und wird der Schalter T₁ geschlossen. Dadurch entlädt sich die Kapazität C_{L} über die zweite Induktivität L2. Bei diesem Umschwingvorgang wird Energie von C_{L} zu L2 umgeschwungen. Der durch L2 fließende Strom steigt dadurch an und sinkt auch nach dem Öffnen des Schalters T₁ zum Zeitpunkt t1' nur allmählich ab. Das Schließen des zweiten Schalters T₂ zu einem Zeitpunkt t2 führt dann dazu, dass der Strom I_{L} zum Laden in den Piezoaktor Cp fließt. Es kommt dann zu einem weiteren Umschwingvorgang von Energie ausgehend von L2 zu Cp. Kurz nachdem dieser Ladestrom I_{L} sein Vorzeichen gewechselt hat wird der zweite Schalter T₂ wieder ausgeschaltet (Zeitpunkt t2'). Der noch weiter in umgekehrter Richtung fließende Strom I_{L} lädt die weitere Kapazität C_{L} wieder auf. Nach einer gewissen Verzögerung wiederholen sich die beschriebenen Umschwingvorgänge (getaktete Aufladung).

Fig. 4b veranschaulicht die entsprechenden zeitlichen Verläufe während des (getakteten) Entladens des zuvor aufgeladenen Piezoaktors Cp.

Für die in Fig. 3 dargestellte Endstufe 10a erfolgt vorteilhaft eine Ermittlung optimaler Schaltzeitpunkte für die Schalter T₁ und T₂, nämlich eine Ermittlung der Zeitpunkte t1 und t2 sowohl beim Laden als auch beim Entladen.

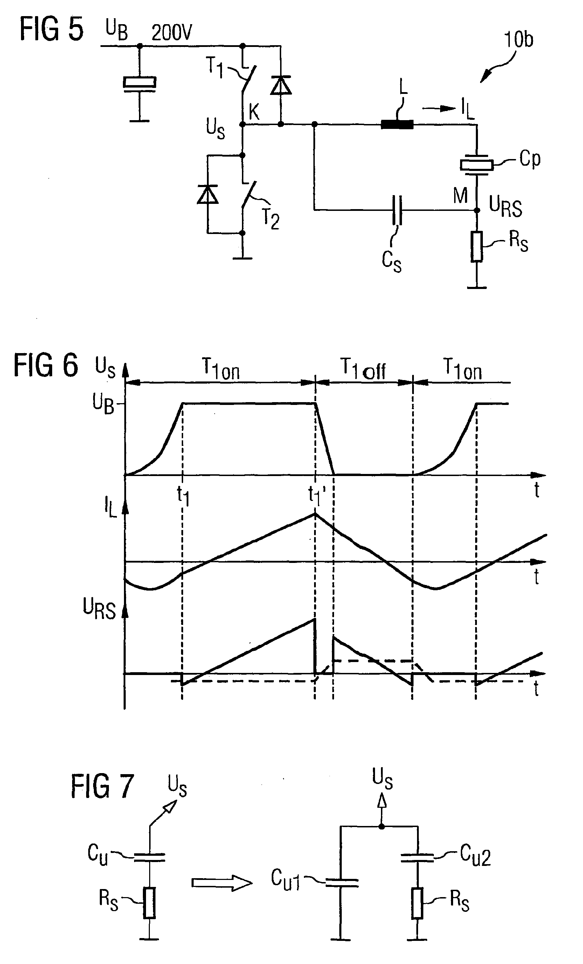

Fig. 5 zeigt eine weitere Endstufe 10b, deren Topologie ähnlich der mit Bezug auf Fig. 1 beschriebenen Schaltungsanordnung gewählt ist.

Ein wesentlicher Unterschied zu der Endstufe 10 nach Fig. 1 besteht jedoch darin, dass der ohnehin zur Messung des Ladestroms bzw. Entladestroms angeordnete Strommesswiderstand R_{S} für die Bereitstellung des erwähnten Messsignals für die Steuereinheit ST (nicht dargestellt) verwendet wird. Zu diesem Zweck ist eine Speicherkapazität Cs gemeinsam mit dem Piezoaktor Cp auf dessen "Messseite" geschaltet, wie in Fig. 5 ersichtlich.

Die daraus resultierenden, etwas komplexeren Signalverläufe sind in Fig. 6 am Beispiel des Ladevorganges dargestellt.

Wieder können vorteilhaft optimale Schaltzeitpunkte für die Schalter T₁ und t2 anhand eines Vergleichs einer an einem Schaltungsknoten M abgegriffenen Messspannung U_{RS} ermittelt werden. Im dargestellten Schaltungsbeispiel sind dies die Zeitpunkte t1 beim Laden und t2 beim Entladen.

Bei der Auswertung des Messsignals U_{RS} kann durch entsprechende Logik mit eingebauten zeitlichen Totzonen eine richtige Auswahl aus den entsprechenden Komparatorpulsen gebildet werden. Dies ist im Allgemeinen bei integrierten Steuerschaltungen problemlos möglich und spart letztendlich Bauteile und Kosten. Sogar die Wirkverluste im Messwiderstand Rₛ können dadurch verringert werden.

Eine weitere, gemäß der Erfindung genutzte Möglichkeit, die Kosten für den relativ teuren Shuntwiderstand zu sparen, besteht in der Aufteilung der Speicherkapazität in zwei parallel zueinander angeordnete Kondensatoren, wobei einer davon nur einen Bruchteil der für das Umschwingprinzip notwendigen Gesamtkapazität liefert. Diese Aufteilung der Kapazität ist in Fig. 7 veranschaulicht.

Anstatt einer einfachen Reihenschaltung aus Cu und R_{S} (Fig. 7 links) kann vorteilhaft der bei den obigen Endstufen wesentlichen Reihenschaltung einer Kapazität Cu₂ und eines Strommesswiderstands R_{S} eine weitere Kapazität Cu₁ parallel geschaltet hinzugefügt werden (Fig. 7 rechts). Damit sinken die Anforderungen an die Leistungseigenschaften des Shuntwiderstands erheblich, der dann z. B. einfacher als Chipwiderstand ausgebildet werden kann. Unter Umständen kann dadurch auch das Layout einer Schaltungsplatte besser optimiert werden, da dieser über den Strommesswiderstand führende Stromweg verhältnismäßig kleine Ströme führt.

## Patentansprüche

1. Schaltungsanordnung zum Laden und Entladen wenigstens einer kapazitiven Last (Cp) durch Umschwingvorgänge an einer Schwingkreisanordnung,
wobei die Schwingkreisanordnung von der kapazitiven Last (Cp) sowie wenigstens einer Induktivität (L) und wenigstens einer Kapazität (Cu) gebildet ist,
wobei die Umschwingvorgänge durch angesteuertes Schließen und Öffnen wenigstens eines ersten Schalters (T₁) und wenigstens eines zweiten Schalters (T₂) angeregt werden,
wobei durch Schließen eines der Schalter (T₁, T₂) die Zufuhr von Energie aus einer Versorgungsspannungsquelle (U_{B}) in die Schwingkreisanordnung bewirkt wird,
wobei eine Steuereinheit (ST) zum Ansteuern der Schalter (T₁, T₂) basierend auf wenigstens einem der Steuereinheit (ST) eingegebenen Messsignal (U_{IC}; U_{RS}) vorgesehen ist,
wobei die Kapazität (Cu) und die Schalter (T₁, T₂) derart angeordnet sind, dass die über der Kapazität (Cu) abfallende Spannung (U_{S}; U_{CU}) repräsentativ für die über wenigstens einem der Schalter (T₁, T₂) abfallende Spannung ist,
**dadurch gekennzeichnet, dass** der Kapazität (Cu) ein Strommesswiderstand (R_{S}) in Reihe geschaltet ist und der Steuereinheit (ST) die an dem Strommesswiderstand (R_{S}) abfallende Spannung (U_{IC}; U_{RS}) als das Messsignal eingegeben wird, wobei der Reihenschaltung aus der Kapazität (Cu₂) und dem Strommesswiderstand (R_{S}) eine weitere Kapazität (Cu₁) parallel geschaltet ist.

2. Schaltungsanordnung nach Anspruch 1, wobei die kapazitive Last (Cp) ein Piezoaktor, insbesondere ein Piezoaktor eines Kraftstoffinjektors einer Brennkraftmaschine ist.

3. Schaltungsanordnung nach Anspruch 1 oder 2, wobei die Schwingkreisanordnung eine aus der Induktivität (L) und der kapazitiven Last (Cp) gebildete Reihenschaltung umfasst und sowohl beim Laden als auch beim Entladen der kapazitiven Last (Cp) der Ladestrom bzw. Entladestrom über die Induktivität (L) geführt wird.

4. Schaltungsanordnung nach Anspruch 1, 2 oder 3, wobei die Versorgungsspannungsquelle (U_{B}) von dem Ausgang eines Gleichspannungswandlers gebildet ist.

5. Schaltungsanordnung nach einem der vorangehenden Ansprüche, wobei die Schalter (T₁, T₂) von Feldeffekttransistoren gebildet sind.

6. Schaltungsanordnung nach einem der vorangehenden Ansprüche, wobei die Steuereinheit (ST) dazu ausgebildet ist, basierend auf dem eingegebenen Messsignal (U_{IC}; U_{RS}) Zeitpunkte in den Umschwingvorgängen zu erkennen, zu denen wenigstens die über einem der Schalter abfallende Spannung einen Extremwert erreicht.

7. Schaltungsanordnung nach einem der vorangehenden Ansprüche, wobei die Steuereinheit (ST) einen Komparator zum Vergleichen des Messsignals (U_{IC}; U_{RS}) mit wenigstens einem Schwellwert (Uₜₕ₁, Uₜₕ₂) aufweist.

8. Schaltungsanordnung nach einem der vorangehenden Ansprüche, wobei die Kapazität (Cu) in einem parallel zu einem der Schalter (T₁, T₂) angeordneten Pfad angeordnet ist.

9. Schaltungsanordnung nach einem der vorangehenden Ansprüche, wobei der Strommesswiderstand (R_{S}) als Chipwiderstand ausgebildet ist.

10. Schaltungsanordnung nach einem der vorangehenden Ansprüche, wobei die weitere Kapazität (Cu₁) größer als die dem Strommesswiderstand (R_{S}) in Reihe geschaltete Kapazität (Cu₂) ist, insbesondere um einen Faktor von mehr als 10 größer ist.

11. Verfahren zum Laden und Entladen wenigstens einer kapazitiven Last (Cp) durch Umschwingvorgänge an einer Schwingkreisanordnung,
wobei die Schwingkreisanordnung von der kapazitiven Last (Cp) sowie wenigstens einer Induktivität (L) und wenigstens einer Kapazität (Cu) gebildet ist,
wobei die Umschwingvorgänge durch angesteuertes Schließen und Öffnen wenigstens eines ersten Schalters (T₁) und wenigstens eines zweiten Schalters (T₂) angeregt werden,
wobei durch Schließen eines der Schalter (T₁, T₂) die Zufuhr von Energie aus einer Versorgungsspannungsquelle (U_{B}) in die Schwingkreisanordnung bewirkt wird,
wobei eine Steuereinheit (ST) zum Ansteuern der Schalter (T₁, T₂) basierend auf wenigstens einem der Steuereinheit (ST) eingegebenen Messsignal (U_{IC}; U_{RS}) verwendet wird,
wobei die Kapazität (Cu) und die Schalter (T₁, T₂) derart angeordnet sind, dass die über der Kapazität (Cu) abfallende Spannung (U_{S}; U_{CU}) repräsentativ für die über wenigstens einem der Schalter (T₁, T₂) abfallende Spannung ist,
**dadurch gekennzeichnet, dass** der Kapazität (Cu) ein Strommesswiderstand (R_{S}) in Reihe geschaltet ist und der Steuereinheit (ST) die an dem Strommesswiderstand (R_{S}) abfallende Spannung (U_{IC}; U_{RS}) als das Messsignal eingegeben wird, wobei der Reihenschaltung aus der Kapazität (Cu₂) und dem Strommesswiderstand (R_{S}) eine weitere Kapazität (Cu₁) parallel geschaltet ist.

## Claims

1. Circuit arrangement for charging and discharging at least one capacitive load (Cp) through ring-around processes on a resonant circuit arrangement,
with the resonant circuit arrangement being formed from the capacitive load (Cp) as well as at least one inductance (L) and at least one capacitance (Cu),
with the ring-around processes being energized by controlled closing and opening of at least one first switch (T₁) and at least one second switch (T₂) ,
with the feeding of energy from a supply voltage source (U_{B}) into the resonant circuit arrangement being effected by closing one of the switches (T₁, T₂) ,
with a control unit (ST) for controlling the switches (T₁, T₂) based on at least one measuring signal (U_{IC}; U_{RS}) entered into the control unit (ST) being provided,
with the capacitance (Cu) and the switches (T₁, T₂) being arranged such that the voltage (U_{S}; U_{CU}) dropping across the capacitance (Cu) is representative of the voltage dropping across at least one of the switches (T₁, T₂),
**characterized in that** a current measuring resistance (R_{S}) is switched in series with the capacitance (Cu) and the voltage (U_{IC}; U_{RS}) dropping at the current measurement resistance (R_{S}) is entered as the measuring signal at the control unit (ST), with a further capacitance (Cu₁) being switched in parallel with the series circuit comprising the capacitance (Cu₂) and the current measurement resistance (R_{S}).

2. Circuit arrangement according to claim 1, with the capacitive load (Cp) being a piezoactuator, especially a piezoactuator of a fuel injector of an internal combustion engine.

3. Circuit arrangement according to claim 1 or 2, with the resonant circuit arrangement comprising a series circuit formed from the inductance (L) and the capacitive load (Cp) and both during charging and during discharging of the capacitive load (Cp) the charging current or discharging current being routed via the inductance (L).

4. Circuit arrangement according to claim 1, 2 or 3, with the supply voltage source (U_{B}) being formed by the output of a direct current converter.

5. Circuit arrangement according to one of the previous claims, with the switches (T₁, T₂) being formed by field effect transistors.

6. Circuit arrangement according to one of the previous claims, with the control unit (ST) being embodied, based on the entered measuring signal (U_{IC}; U_{RS}) to detect times in the ring-around processes at which at least the voltage dropping across one of the switches reaches an extreme value.

7. Circuit arrangement according to one of the previous claims, with the control unit (ST) featuring a comparator for comparison of the measuring signal (U_{IC}; U_{RS}) with at least one threshold value (Uₜₕ₁, Uₜₕ₂).

8. Circuit arrangement according to one of the previous claims, with the capacitor (Cu) being arranged in a path arranged in parallel to one of the switches (T₁, T₂).

9. Circuit arrangement according to one of the previous claims, with the current measurement resistance (R_{S}) being embodied as a chip resistor.

10. Circuit arrangement according to one of the previous claims, with the further capacitance (Cu₁) being greater than the capacitance (Cu₂) connected in series downstream from the current measurement resistance (R_{S}), especially being greater by a factor of more than 10.

11. Method for charging and discharging at least one capacitive load (Cp) through ring-around processes on a resonant circuit,
with the resonant circuit arrangement being formed from the capacitive load (Cp) as well as at least one inductance (L) and at least one capacitance (Cu),
with the ring-around processes being energized by controlled closing and opening of at least one first switch (T₁) and at least one second switch (T₂),
with the feeding of energy from a supply voltage source (U_{B}) into the resonant circuit arrangement being effected by closing one of the switches (T₁, T₂) ,
with a control unit (ST) for controlling the switches (T₁, T₂) based on at least one measuring signal (U_{IC}; U_{RS}) entered into the control unit (ST) being used,
with the capacitance (Cu) and the switches (T₁, T₂) being arranged such that the voltage (U_{S}; U_{CU}) dropping across the capacitance (Cu) is representative of the voltage dropping across at least one of the switches (T₁, T₂),
**characterized in that** a current measuring resistance (R_{S}) is switched in series with the capacitance (Cu) and the voltage (U_{IC}; U_{RS}) dropping at the current measurement resistance (R_{S}) is entered as the measuring signal at the control unit (ST), with a further capacitance (Cu₁) being switched in parallel with the series circuit comprising the capacitance (Cu₂) and the current measurement resistance (R_{S}).

## Revendications

1. Dispositif de circuit destiné à charger et décharger au moins une charge capacitive (Cp) par des opérations d'oscillation dans un dispositif de circuit oscillant,
dans lequel le dispositif de circuit oscillant est formé de la charge capacitive (Cp) ainsi que d'au moins une inductance (L) et d'au moins une capacité (Cu),
dans lequel les opérations d'oscillation sont excitées par fermeture et ouverture commandées d'au moins un premier interrupteur (T₁) et d'au moins un second interrupteur (T₂),
dans lequel l'amenée d'énergie au dispositif de circuit oscillant en provenance d'une source de tension d'alimentation (U_{B}) est provoquée par la fermeture d'un des interrupteurs (T₁, T₂),
dans lequel il est prévu une unité de commande (ST) destinée à commander les interrupteurs (T₁, T₂) en se basant sur au moins un signal de mesure (U_{IC} ; U_{RS}) envoyé à l'unité de commande (ST),
dans lequel la capacité (Cu) et les interrupteurs (T₁, T₂) sont disposés de telle manière que la tension (U_{S}; U_{CU}) chutant à travers la capacité (Cu) soit représentative de la tension chutant à travers au moins un des interrupteurs (T₁, T₂)
**caractérisé en ce qu'**une résistance de mesure du courant (R_{S}) est connectée en série avec la capacité (Cu) la tension (U_{IC}; U_{RS}) chutant à travers la résistance de mesure du courant (R_{S}) une capacité additionnelle (Cu₁) est connectée étant envoyée à l'unité de commande (ST) en tant que signal de mesure, et **en ce qu'**en parallèle avec le circuit série composé de la capacité (Cu₂) et de la résistance de mesure du courant (R_{S}).

2. Dispositif de circuit selon la revendication 1, dans lequel la charge capacitive (Cp) est un actionneur piézo-électrique, en particulier un actionneur piézo-électrique d'un injecteur de carburant d'un moteur à combustion interne.

3. Dispositif de circuit selon la revendication 1 ou 2, dans lequel le dispositif de circuit oscillant comprend un circuit série formé de l'inductance (L) et de la charge capacitive (Cp), et le courant de charge ou le courant de décharge passe à travers l'inductance (L) aussi bien lors de la charge que lors de la décharge de la charge capacitive (Cp).

4. Dispositif de circuit selon la revendication 1, 2 ou 3, dans lequel la source de tension d'alimentation (U_{B}) est formée par la sortie d'un convertisseur continu-continu.

5. Dispositif de circuit selon une des revendications précédentes, dans lequel les interrupteurs (T₁, T₂) sont constitués par des transistors à effet de champ.

6. Dispositif de circuit selon une des revendications précédentes, dans lequel l'unité de commande (ST) est construite pour détecter, en se basant sur le signal de mesure introduit (U_{IC}, U_{RS}), les instants des opérations d'oscillation où au moins la tension chutant à travers l'un des interrupteurs atteint une valeur extrême.

7. Dispositif de circuit selon une des revendications précédentes, dans lequel l'unité de commande (ST) présente un comparateur destiné à comparer le signal de mesure (U_{IC}, U_{RS}) avec au moins une valeur de seuil (Uₜₕ₁. Uₜₕ₂).

8. Dispositif de circuit selon une des revendications précédentes, dans lequel la capacité (Cu) est disposée dans un trajet disposé parallèlement à l'un des interrupteurs (T₁, T₂).

9. Dispositif de circuit selon une des revendications précédentes, dans lequel la résistance de mesure du courant (R_{S}) est constitué par une puce résistive.

10. Dispositif de circuit selon une des revendications précédentes, dans lequel la capacité additionnelle (Cu₁) est plus forte que la capacité (Cu₂) connectée en série avec la résistance de mesure du courant (RS), en particulier plus forte d'un facteur de plus de 10.

11. Procédé pour charger et décharger au moins une charge capacitive (Cp) par des opérations d'oscillation sur un circuit oscillant,
dans lequel le dispositif de circuit oscillant est formé de la charge capacitive (Cp) ainsi que d'au moins une inductance (L) et d'au moins une capacité (Cu),
dans lequel les opérations d'oscillation sont excitées par fermeture et ouverture commandées d'au moins un premier interrupteur (T₁) et d'au moins un second interrupteur (T₂),
dans lequel l'amenée d'énergie au dispositif de circuit oscillant en provenance d'une source de tension d'alimentation (U_{B}) est provoquée par la fermeture d'un des interrupteurs (T₁, T₂),
dans lequel il est prévu une unité de commande (ST) destinée à commander les interrupteurs (T₁, T₂) en se basant sur au moins un signal de mesure (U_{IC} ; U_{RS}) envoyé à l'unité de commande (ST),
dans lequel la capacité (Cu) et les interrupteurs (T₁, T₂) sont disposés de telle manière que la tension (U_{S}; U_{CU}) chutant à travers la capacité (Cu) soit représentative de la tension chutant à travers au moins un des interrupteurs (T₁, T₂)
**caractérisé en ce qu'**une résistance de mesure du courant (R_{S}) est connectée en série avec la capacité (Cu) la tension (U_{IC}; U_{RS}) chutant à travers la résistance de mesure du courant (R_{S}) une capacité additionnelle (Cu₁) est connectée étant envoyée à l'unité de commande (ST) en tant que signal de mesure, et **en ce qu'**en parallèle avec le circuit série composé de la capacité (Cu₂) et de la résistance de mesure du courant (R_{S}).
